# FASCICULE DE BREVET EUROPEEN

(11) **EP 1 684 569 B1**
(45) Date de publication et mention de la délivrance du brevet: **03.10.2007**
(21) Numéro de dépôt: 04805763.2
(22) Date de dépôt: 21.10.2004
(51) Int. Cl.: A01D 78/10, A01B 73/06

(54) **MACHINE AGRICOLE POUR L'ANDAINAGE DE PRODUITS SE TROUVANT AU SOL**
LANDMASCHINE ZUM SCHWADEN VON AUF DEM BODEN LIEGENDEN PRODUKTEN
AGRICULTURAL MACHINE FOR SWATHING PRODUCTS LYING ON THE GROUND

(30) Priorité: 29.10.2003 FR 0312665
(43) Date de publication de la demande: 02.08.2006
(73) Titulaire: KUHN S.A., 67706 Saverne Cedex (FR)
(72) Inventeur: GEISER, Jens, 38173 Dettum (DE)
(74) Mandataire: Andres, Jean-Claude
(86) Numéro de dépôt international: PCT/FR2004/050520
(87) Numéro de publication internationale: WO 2005/041638

(56) Documents cités:
- EP-A- 0 872 170
- EP-A- 1 108 352
- CA-A- 2 313 362
- DE-U- 20 113 172
- US-A1- 2001 008 185

## Description

La présente invention se rapporte à une machine agricole pour regrouper des andains ou pour andainer des produits tels que de l'herbe, du foin ou de la paille, qui se trouvent sur le sol. Cette machine comporte notamment un bâti principal portant un dispositif de ramassage et d'andainage central qui est relié audit bâti principal et deux dispositifs de ramassage et d'andainage latéraux qui sont reliés à des bras porteurs qui s'étendent latéralement par rapport au bâti principal.

Une telle machine est connue par le document EP-A-1108352.

Sur une machine de ce genre les dispositifs de ramassage et d'andainage latéraux peuvent être repliés vers le haut pour le transport, au moyen de leurs bras porteurs, autour d'axes sensiblement horizontaux. Cet agencement permet de réduire la largeur de la machine afin de favoriser les déplacements sur les chemins et les routes. Cependant, dans cette position, la hauteur de la machine est considérablement augmentée. Cela gêne la visibilité vers l'arrière et nuit à la stabilité de la machine en raison de l'éloignement du sol de son centre de gravité. Elle risque alors de se renverser en passant sur d'importantes dénivellations ou dans un virage.

La présente invention a pour but de remédier aux inconvénients précités. Elle doit notamment proposer une machine telle que décrite dans l'introduction et qui peut être transposée d'une manière simple dans une position de transport dans laquelle elle conserve une bonne stabilité.

A cet effet, une importante caractéristique de l'invention consiste en ce que les dispositifs latéraux et le dispositif central sont sensiblement alignés et s'étendent sensiblement perpendiculairement à la direction d'avancement de la machine durant le travail, et en ce que chaque bras porteur latéral d'un dispositif de ramassage et d'andainage latéral est articulé par rapport au bâti principal sur un axe sensiblement vertical autour duquel il est repliable d'un angle d'environ 90° en position de transport dans laquelle lesdits dispositifs de ramassage et d'andainage latéraux se situent de part et d'autre du dispositif de ramassage et d'andainage central et que chaque dispositif de ramassage et d'andainage latéral est articulé sur son bras porteur au moyen d'un axe sensiblement horizontal et dirigé sensiblement perpendiculairement à la direction d'avancement en position de travail, autour duquel axe il est repliable vers le haut d'un angle d'environ 90° pour le transport

Cet agencement permet de replier les dispositifs de ramassage et d'andainage latéraux dans une position où ils sont dirigés dans la direction d'avancement et où leur largeur est réduite. Dans cette position la machine est compacte. Sa faible largeur permet de la déplacer sur les routes et son centre de gravité qui reste relativement bas lui procure une bonne stabilité.

Selon une autre caractéristique de l'invention, le bâti comporte des mécanismes d'immobilisation des dispositifs de ramassage et d'andainage latéraux dans la position de transport. Chacun de ces mécanismes d'immobilisation se compose avantageusement d'un bras qui est solidaire du bâti et sur lequel est articulé un crochet actionné par un système de leviers. Ce système forme une articulation du type genouillère qui est commandée au moyen d'un vérin hydraulique.

D'autres caractéristiques et avantages de l'invention ressortiront de la description qui va suivre et qui se réfère aux dessins annexés qui représentent, à titre d'exemple non limitatif, une forme de réalisation de la machine selon l'invention.

Dans ces dessins :
- la figure 1 représente une vue de dessus, avec des coupes partielles, d'une machine selon l'invention en position de travail,
- la figure 2 représente une vue de côté, à plus grande échelle, d'un dispositif de ramassage et d'andainage latéral en position de travail,
- la figure 3 représente une vue analogue à celle de la figure 2 avec le dispositif de ramassage et d'andainage latéral relevé,
- la figure 4 représente une vue de dessus de la machine selon l'invention en position de transport,
- la figure 5 représente une vue de côté de la machine selon l'invention en position de transport ou de dépose,
- la figure 6 représente une vue de détail d'un mécanisme d'immobilisation en position débloquée,
- la figure 7 représente une vue de détail du mécanisme d'immobilisation en position bloquée.

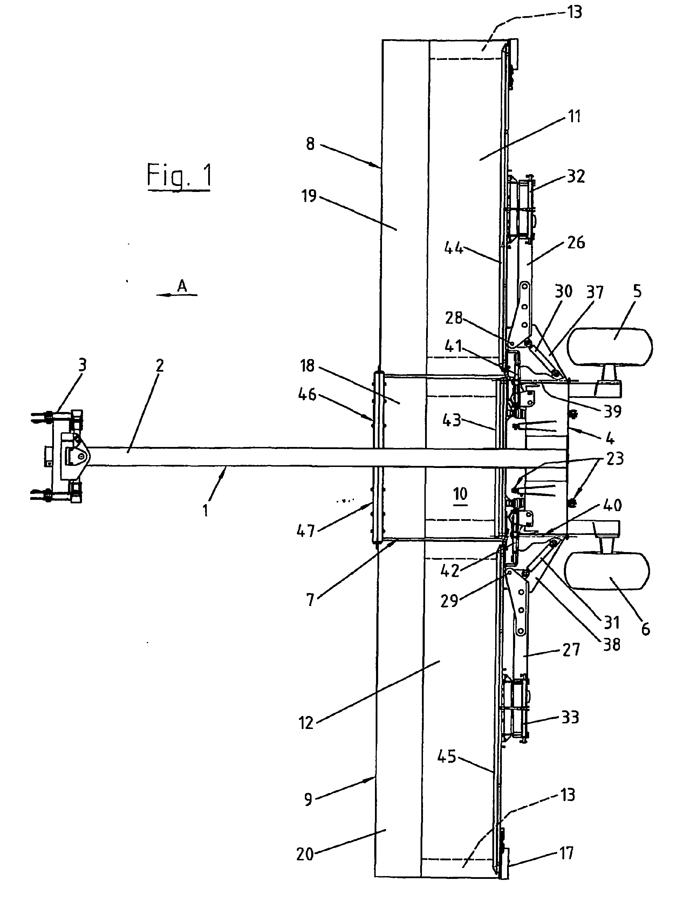

Telle qu'elle est représentée sur la figure 1, la machine selon l'invention comporte un bâti principal (1). Celui-ci est constitué par une poutre centrale (2) qui possède à son extrémité avant une tête d'accouplement (3) pour l'accrocher à un tracteur permettant d'animer et de déplacer la machine dans la direction d'avancement (A). La poutre (2) possède à son extrémité arrière une traverse (4) à laquelle sont reliées deux roues de déplacement (5 et 6) qui reposent sur le sol. Ladite traverse (4) porte un dispositif de ramassage et d'andainage central (7) et deux dispositifs de ramassage et d'andainage latéraux (8 et 9). Ceux-ci sont sensiblement alignés et s'étendent sensiblement perpendiculairement à la direction d'avancement (A) durant le travail.

Dans l'exemple représenté, les dispositifs de ramassage et d'andainage (7, 8 et 9) comprennent des bandes transporteuses (10, 11 et 12) pour l'andainage. Celles-ci sont guidées sur des rouleaux (13) qui sont portés par des cadres supports (14) munis de roues (15 et 16). Ces rouleaux (13) peuvent être entraînés en rotation au moyen de moteurs hydrauliques (17) afin de déplacer les bandes transporteuses (10, 11 et 12) vers la droite ou vers la gauche.

Les dispositifs de ramassage et d'andainage (7, 8 et 9) comprennent également des pick-up (18, 19 et 20) pour ramasser les produits au sol. Ceux-ci se situent à l'avant des bandes transporteuses (10, 11, 12) et sont fixés aux cadres supports (14). Chaque pick-up (18, 19, 20) possède des dents de râtelage (21) qui sont entraînées en rotation autour d'un axe horizontal (22) de manière à ramasser le fourrage au sol et le déplacer sur la bande transporteuse (10, 11 ou 12) correspondante. Cet entraînement peut être assuré au moyen d'un moteur hydraulique non représenté.

Ledit entraînement des bandes transporteuses (10, 11 et 12) et des pick-up (18, 19, 20) peut également être assuré par des moyens mécaniques reliés à un arbre de prise de force du tracteur.

Le dispositif de ramassage et d'andainage central (7) est relié au bâti principal (1) au moyen d'un mécanisme de relevage (23). Celui-ci se compose de vérins hydrauliques (24) et de leviers (25). Ces derniers sont articulés sur ledit dispositif (7) et sur le bâti principal (1) et sont agencés en forme de parallélogrammes. Les vérins hydrauliques (24) sont reliés au bâti (1) et agissent sur les leviers (25) de manière à déplacer par leur intermédiaire le dispositif de ramassage et d'andainage central (7) vers le haut et vers le bas.

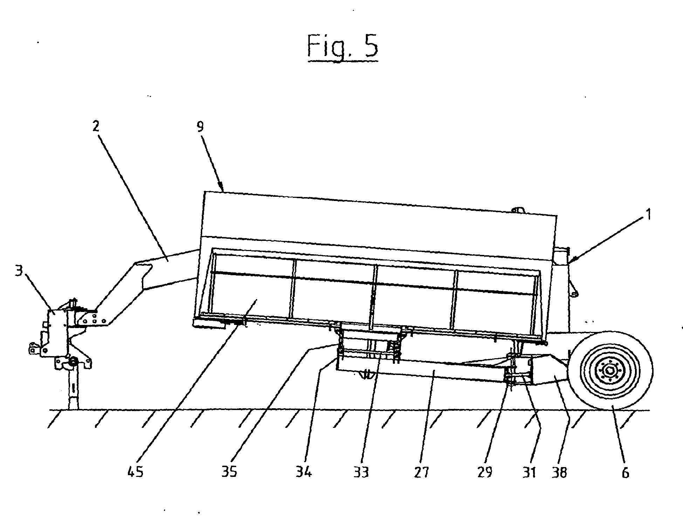

Chaque dispositif de ramassage et d'andainage latéral (8, 9) est relié à un bras porteur (26, 27) qui s'étend latéralement par rapport au bâti principal (1). Comme cela ressort notamment des figures 1 et 5 chaque bras porteur latéral (26, 27) est articulé par rapport au bâti (1) sur un axe sensiblement vertical (28, 29). Il est repliable autour de cet axe (28, 29) d'un angle d'environ 90° vers l'avant pour le transport, au moyen d'un vérin hydraulique (30, 31) qui se situe entre le bâti (1) et le bras porteur (26, 27) correspondant

Chaque dispositif de ramassage et d'andainage latéral (8, 9) est articulé sur son bras porteur (26, 27) au moyen d'un axe (32, 33) sensiblement horizontal et sensiblement perpendiculaire à la direction d'avancement (A) en position de travail. Chaque axe (32, ,33) se situe au-dessus du bras porteur (26, 27) correspondant Chacun est guidé dans des pattes (34) qui sont fixées à la face supérieure dudit bras porteur (26, 27). Enfin, chaque dispositif de ramassage et d'andainage latéral (8, 9) comporte à son côté arrière des pattes coudées (35) qui sont articulées sur ces axes (32 et 33).

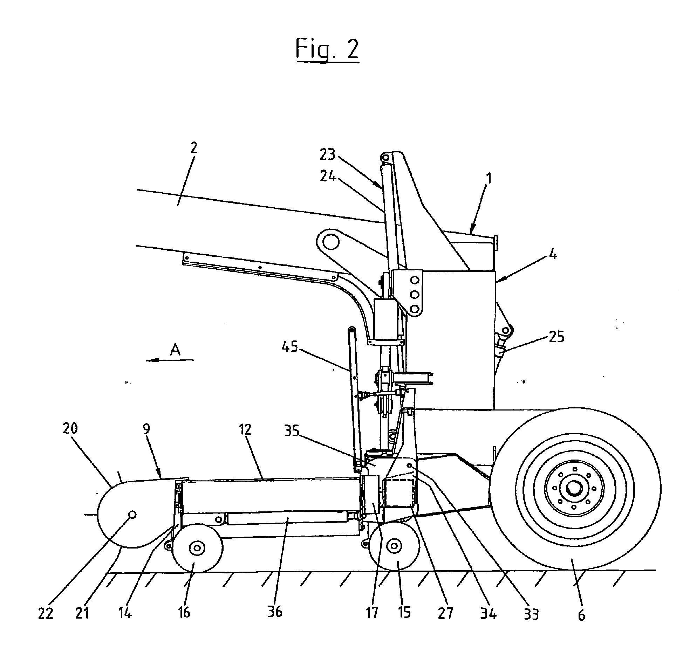

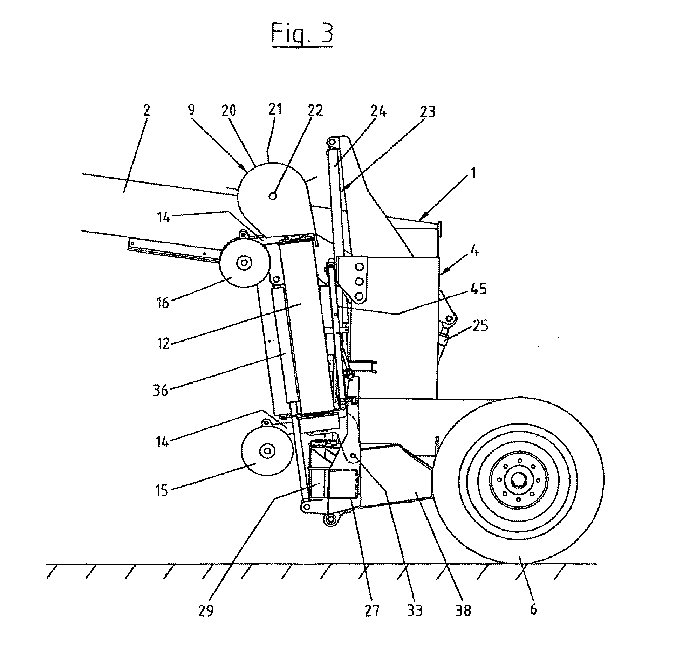

Chaque dispositif de ramassage et d'andainage latéral (8, 9) est déplaçable autour de son axe d'articulation (32, 33) avec le bras porteur (26, 27) au moyen d'un vérin hydraulique (36) qui se situe sous ledit dispositif (8, 9). Ledit vérin hydraulique (36) est relié au cadre (14) et au bras porteur (26, 27) correspondants (voir figures 2 et 3).

L'axe d'articulation sensiblement vertical (28, 29) de chaque bras porteur (26, 27) se situe à l'arrière du dispositif de ramassage et d'andainage latéral (8, 9) correspondant et au voisinage de son extrémité la plus proche du dispositif de ramassage et d'andainage central (7). Chacun desdits axes d'articulation (28, 29) est logé dans les parois supérieure et inférieure d'une poutre latérale (37, 38) du bâti principal (1) (voir figures 1 et 5). Les vérins hydrauliques (30, 31) prévus pour le repliage des bras porteurs (26, 27) autour des axes d'articulation (28, 29) sont avantageusement logés dans lesdites poutres latérales (37, 38). Ils sont articulés à l'une de leurs extrémités sur une des parois de cette poutre (37, 38) et à leur autre extrémité sur le bras porteur (26, 27) correspondant. Chaque poutre latérale (37, 38) comporte un axe de pivotement sensiblement horizontal (39, 40) et dirigé dans la direction d'avancement (A). Cet axe permet à chaque dispositif de ramassage et d'andainage latéral (39, 40) et au bras porteur (26, 27) correspondant de se déplacer en hauteur par exemple pour suivre les dénivellations du sol. Un vérin hydraulique (41, 42) peut être associé à chaque poutre latérale (37, 38) en vue de pouvoir soulever le dispositif de ramassage et d'andainage (8, 9) correspondant dans le cas où il y aurait un obstacle plus important à passer.

A l'arrière des bandes transporteuses (10, 11 et 12) sont disposés des déflecteurs (43, 44 et 45) pour le guidage des produits. Ces déflecteurs (43, 44 et 45) sont articulés sur les cadres (14) et sont déplaçables d'une position sensiblement perpendiculaire aux bandes transporteuses (10, 11 et 12) au travail dans une position sensiblement parallèle auxdites bandes transporteuses au transport.

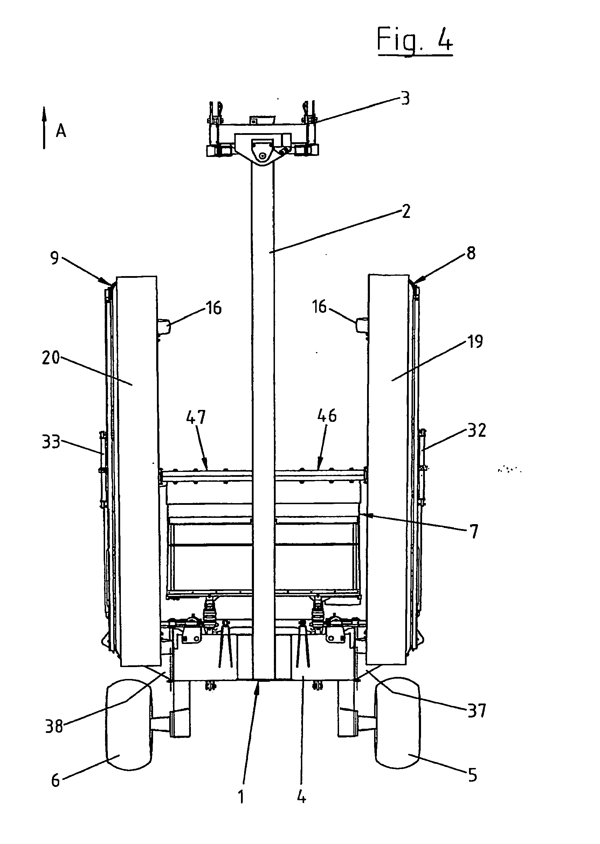

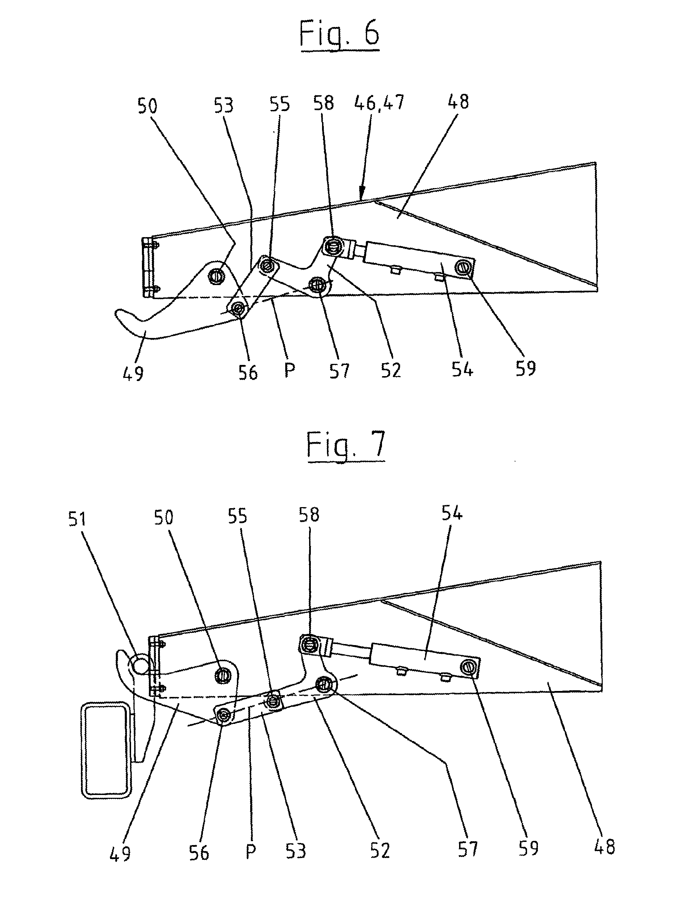

Le bâti principal (1) comporte des mécanismes d'immobilisation (46 et 47) des dispositifs de ramassage et d'andainage latéraux (8 et 9) en position de transport Comme cela ressort de la figure 4, ces mécanismes (46 et 47) s'étendent de part et d'autre de la poutre centrale (2) et relient les dispositifs de ramassage et d'andainage latéraux (8 et 9) à cette poutre centrale (2) au transport et à la dépose. Chacun de ces mécanismes (46 et 47) se compose d'un bras (48) qui est solidaire de la poutre centrale (2) du bâti (1) et sur lequel est articulé un crochet (49) au moyen d'un axe (50) (voir figures 6 et 7). Ce crochet (49) s'accroche sur un arceau (51) prévu sur le dispositif de ramassage et d'andainage latéral (8, 9) correspondant en vue de l'immobilisation de celui-ci. A cet effet, le crochet (49) peut être déplacé autour de l'axe (50) par un système de leviers (52, 53) commandé au moyen d'un vérin hydraulique (54). Le système de leviers (52, 53) forme une articulation du type genouillère autobloquée en position d'immobilisation des dispositifs de ramassage et d'andainage latéraux (8 et 9). Il comprend un premier levier (52) qui est coudé et un second levier droit (53) qui sont articulés entre eux au moyen d'un axe (55). Ledit levier droit (53) est également articulé sur le crochet (49) au moyen d'un axe (56). Le levier coudé (52) est articulé sur le bras (48) correspondant au moyen d'un axe (57) et sur la tige du vérin hydraulique (54) au moyen d'un axe (58). Le corps dudit vérin hydraulique (54) est pour sa part articulé sur le bras (48) correspondant au moyen d'un axe (59).

On voit sur la figure 7 que la disposition des axes d'articulation (55, 56 et 57) des leviers (52 et 53) est telle que lorsque le dispositif d'immobilisation est en position de blocage, l'axe d'articulation (55) entre les deux leviers (52 et 53) se situe en dessous d'un plan (P) passant par les deux autres axes d'articulation (56 et 57) desdits leviers (52 et 53). Dans cette position le crochet (49) est maintenu dans la position de blocage par les leviers (52 et 53), indépendamment de l'action du vérin hydraulique (54). Dans la position débloquée (figure 6) l'axe d'articulation (55) entre les deux leviers (52 et 53) se situe au-dessus du plan (P). Cette position est obtenue en tirant sur le levier coudé (52) au moyen du vérin hydraulique (54) en vue de le faire pivoter sur son axe d'articulation (57). L'axe d'articulation (55) et le second levier (53) se déplacent alors vers le haut et entraînent le crochet (49) qu'ils font tourner autour de son axe d'articulation (50) de sorte que son extrémité se dégage vers le bas. Le retour en position de blocage s'effectue en exerçant une pression sur le premier levier (52) avec le vérin hydraulique (54) afin que les leviers (52 et 53) se déplacent d'une manière inverse à celle décrite ci-dessus.

Les vérins hydrauliques (24, 30, 31, 36, 41, 42 et 54) de la machine sont avantageusement reliés à la centrale hydraulique du tracteur au moyen de tuyaux et peuvent être commandés à partir de celui-ci.

Durant le travail, la machine est accrochée à un tracteur qui l'anime et la déplace dans la direction d'avancement (A). Le dispositif de ramassage et d'andainage central (7) est abaissé au moyen du mécanisme de relevage (23) de sorte que ses roues (15 et 16) se déplacent sur le sol. Les bras porteurs (26 et 27) et les dispositifs de ramassage et d'andainage latéraux (8 et 9) s'étendent de part et d'autre de la poutre centrale (2). Les roues (15 et 16) desdits dispositifs (8 et 9) se déplacent également sur le sol. Les trois dispositifs de ramassage et d'andainage (7, 8 et 9) sont alors sensiblement alignés et s'étendent sensiblement perpendiculairement à la direction d'avancement (A). Leurs pick-up (18, 19 et 20) sont entraînés de sorte que les dents de râtelage (21) ramassent le fourrage au sol et le déposent sur les bandes transporteuses (10, 11 et 12). Celles-ci sont entraînées de sorte qu'elles déplacent ce fourrage latéralement, le transmettent de l'une à l'autre sans qu'il revienne au sol et le déposent sur un des côtés de la machine sous la forme d'un andain de gros volume. Le sens de déplacement des bandes transporteuses (10, 11 et 12) peut être choisi en fonction du côté sur lequel le fourrage doit être déposé.

Il est également possible de soulever le dispositif de ramassage d'andainage central (7) au moyen du mécanisme de relevage (23) et de ne travailler qu'avec les dispositifs latéraux (8 et 9). Leurs bandes transporteuses (11 et 12) peuvent alors être entraînées en sens inverse de sorte qu'elles déplacent le fourrage vers le milieu de la machine pour former un andain central.

Pour le transport le dispositif de ramassage et d'andainage central (7) est soulevé avec le mécanisme de relevage (23) en vue de l'éloigner du sol. Ensuite les dispositifs de ramassage et d'andainage latéraux (8 et 9) sont pivotés au moyen des vérins hydrauliques (36) autour de leurs axes d'articulation (32 et 33) jusque dans une position sensiblement verticale. Ils se situent alors sensiblement au-dessus des bras porteurs (26 et 27). Ces derniers sont ensuite repliés vers l'avant, par l'intermédiaire des vérins hydrauliques (30 et 31), jusque dans une position où ils sont dirigés dans la direction d'avancement (A). Les dispositifs de ramassage et d'andainage latéraux (8 et 9) sont alors sensiblement parallèles à la poutre centrale (2) du châssis (1) et se situent de part et d'autre du dispositif de ramassage et d'andainage central (7). La largeur de la machine est ainsi considérablement réduite et sa garde au sol est suffisante pour les déplacements sur les chemins et les routes (figures 4 et 5).

Dans cette position de transport les dispositifs de ramassage et d'andainage latéraux (8 et 9) sont bloqués par rapport au bâti (1) au moyen des mécanismes d'immobilisation (46 et 47). Avant que ces dispositifs latéraux (8 et 9) ne parviennent dans la position de transport, les crochets (49) sont maintenus vers le bas en position débloquée par les leviers (52 et 53) et les vérins hydrauliques (54) qui sont en position fermée (voir figure 6). Dès que lesdits dispositifs latéraux (8 et 9) arrivent au voisinage des bras (48), les vérins hydrauliques (54) sont actionnés pour qu'ils s'allongent De ce fait, ils poussent les leviers (52 et 53) vers le bas de sorte que ceux-ci déplacent les crochets (49) vers le haut pour qu'ils accrochent les étriers (51) prévus sur les dispositifs latéraux (8 et 9) (voir figure 7). Grâce à la disposition des leviers (52 et 53) dans cette position, ceux-ci maintiennent les crochets (49) dans la position de blocage même si la pression hydraulique venait à diminuer dans les vérins (54) par suite d'une fuite par exemple.

Pour le retour dans la position de travail, les vérins hydrauliques (54) sont commandés pour qu'ils dégagent les crochets (49) vers le bas. Ensuite, les bras porteurs (26 et 27) peuvent être pivotés vers l'extérieur et vers l'arrière par les vérins hydrauliques (30 et 31) et les dispositifs de ramassage et d'andainage (8 et 9) peuvent être abaissés jusqu'au sol au moyen des vérins hydrauliques (36). Les actions de ces différents vérins hydrauliques (24, 30, 31, 36 et 54) peuvent être initiées automatiquement à l'aide de distributeurs commandés à partir de détecteurs des positions des bras porteurs (26 et 27) et des dispositifs de ramassage et d'andainage (7, 8 et 9).

Il est bien évident que l'invention n'est pas limitée au mode de réalisation décrit et représenté sur les dessins annexés. Des modifications restent possibles, notamment en ce qui concerne la constitution des divers éléments ou par substitution d'équivalents techniques, sans sortir pour autant du domaine de protection.

## Revendications

1. Machine agricole pour regrouper des andains ou pour andainer des produits tels que de l'herbe, du foin ou de la paille, qui se trouvent sur le sol, comportant un bâti principal (1) portant un dispositif de ramassage et d'andainage central (7) qui est relié audit bâti principal (1) au moyen d'un dispositif de relevage et deux dispositifs de ramassage et d'andainage latéraux (8 et 9) qui sont reliés à des bras porteurs (26 et 27) qui s'étendent latéralement par rapport au bâti (1), **caractérisé en ce que** les dispositifs latéraux (8 et 9) et le dispositif central (7) sont sensiblement alignés et s'étendent sensiblement perpendiculairement à la direction d'avancement (A) de la machine durant le travail, et **en ce que** chaque bras porteur latéral (26, 27) d'un dispositif de ramassage et d'andainage latéral (8, 9) est articulé par rapport audit bâti (1) sur un axe sensiblement vertical (28, 29) autour duquel il est repliable d'un angle d'environ 90° en position de transport dans laquelle lesdits dispositifs de ramassage et d'andainage latéraux (8,9) se situent de part et d'autre du dispositif de ramassage et d'andainage central (7) et que chaque dispositif de ramassage et d'andainage latéral (8, 9) est articulé sur son bras porteur (26, 27) au moyen d'un axe (32, 33) sensiblement horizontal et dirigé sensiblement perpendiculairement à la direction d'avancement (A) en position de travail, autour duquel axe d'articulation (32, 33) il est repliable vers le haut d'un angle d'environ 90° pour le transport.

2. Machine selon la revendication 1, ***caractérisée par le fait* que** l'axe d'articulation (32, 33) sensiblement horizontal de chaque dispositif de ramassage et d'andainage latéral (8, 9) se situe au-dessus du bras porteur (26, 27) correspondant.

3. Machine selon la revendication 2, ***caractérisée par le fait* que** chaque dispositif de ramassage et d'andainage latéral (8, 9) est déplaçable autour de son axe d'articulation sensiblement horizontal (32, 33) au moyen d'un vérin hydraulique (36) disposé entre ledit dispositif (8, 9) et le bras porteur (26, 27) correspondant.

4. Machine selon la revendication 3, ***caractérisée par le fait* que** le vérin hydraulique (36) se situe sous le dispositif de ramassage et d'andainage latéral (8, 9) correspondant

5. Machine selon la revendication 1, ***caratérisée par le fait*** que l'axe d'articulation sensiblement vertical (28, 29) de chaque bras porteur latéral (26, 27) se situe à l'arrière du dispositif de ramassage et d'andainage latéral (8, 9) correspondant et au voisinage de son extrémité la plus proche du dispositif de ramassage et d'andainage central (7).

6. Machine selon la revendication 5, ***caratérisée par le fait*** que l'axe d'articulation sensiblement vertical (28, 29) de chaque bras porteur latéral (26, 27) se situe sur une poutre latérale (37, 38) du bâti (1), laquelle poutre latérale (37, 38) est articulée sur un axe (39, 40) sensiblement horizontal et dirigé dans la direction d'avancement (A).

7. Machine selon l'une quelconque des revendications 5 ou 6, ***caratérisée par le fait*** que chaque bras porteur latéral (26, 27) est déplaçable autour de son axe d'articulation sensiblement vertical (28, 29) au moyen d'un vérin hydraulique (30, 31).

8. Machine selon l'une quelconque des revendications précédentes, ***caractérisée par le fait* que** le bâti (1) comporte des mécanismes d'immobilisation (46 et 47) des dispositifs de ramassage et d'andainage latéraux (8 et 9) en position de transport.

9. Machine selon la revendication 8, ***caractérisée par le fait* que** chaque mécanisme d'immobilisation (46 et 47) se compose d'un bras (48) qui est solidaire du bâti (1) et sur lequel est articulé un crochet (49) actionné par un système de leviers (52 et 53) commandé au moyen d'un vérin hydraulique (54).

10. Machine selon la revendication 9, ***caractérisée par le fait* que** le système de leviers (52 et 53) forme une articulation du type genouillère autobloquée en position d'immobilisation des dispositifs de ramassage et d'andainage latéraux (8 et 9).

## Claims

1. Agricultural machine for grouping windrows together or for windrowing products such as grass, hay or straw that are lying on the ground, comprising a main frame (1) supporting a central gathering and windrowing device (7) that is connected to the said main frame (1) by means of a lifting device and two side gathering and windrowing devices (8 and 9) that are connected to support arms (26 and 27) that extend laterally relative to the frame (1), ***characterized in* that** the side devices (8 and 9) and central device (7) are substantially in line and extend substantially perpendicular to the direction of travel (A) of the machine during work, and **in that** each side support arm (26, 27) of a side gathering and windrowing device (8, 9) is articulated relative to the said frame (1) on a substantially vertical axis (28, 29) about which it is foldable at an angle of approximately 90° into a transport position in which the said side gathering and windrowing devices (8, 9) are situated on either side of the central gathering and windrowing device (7) and that each side gathering and windrowing device (8, 9) is articulated on its support arm (26, 27) by means of a substantially horizontal axis (32, 33) directed substantially perpendicular to the direction of travel (A) in the working position, about which axis of articulation (32, 33) it is foldable upwards at an angle of approximately 90° for transport.

2. Machine according to claim 1, ***characterized in* that** the substantially horizontal axis of articulation (32, 33) of each side gathering and windrowing device (8, 9) is situated above the corresponding support arm (26, 27).

3. Machine according to claim 2, ***characterized in* that** each side gathering and windrowing device (8, 9) can be moved about its substantially horizontal axis of articulation (32, 33) by means of a hydraulic cylinder (36) arranged between the said device (8, 9) and the corresponding support arm (26, 27).

4. Machine according to claim 3, ***characterized in* that** the hydraulic cylinder (36) is situated beneath the corresponding side gathering and windrowing device (8, 9).

5. Machine according to claim 1, ***characterized in* that** the substantially vertical axis of articulation (28, 29) of each side support arm (26, 27) is situated at the rear of the corresponding side gathering and windrowing device (8, 9) and in the vicinity of its end closest to the central gathering and windrowing device (7).

6. Machine according to claim 5, ***characterized in* that** the substantially vertical axis of articulation (28, 29) of each side support arm (26, 27) is situated on a side beam (37, 38) of the frame (1), which side beam (37, 38) is articulated on a substantially horizontal axis (39, 40) and directed in the direction of travel (A).

7. Machine according to any one of claims 5 or 6, ***characterized in* that** each side support arm (26, 27) can be moved about its substantially vertical axis of articulation (28, 29) by means of a hydraulic cylinder (30, 31).

8. Machine according to any one of the preceding claims, ***characterized in* that** the frame (1) comprises mechanisms (46 and 47) for immobilizing the side gathering and windrowing devices (8 and 9) in the transport position.

9. Machine according to claim 8, ***characterized in* that** each immobilization mechanism (46 and 47) consists of an arm (48) that is rigidly fastened to the frame (1) and on which is articulated a hook (49) actuated by a system of levers (52 and 53) controlled by means of a hydraulic cylinder (54).

10. Machine according to claim 9, ***characterized in* that** the system of levers (52 and 53) forms an articulation of the knuckle-joint type which is self-locked in the position of immobilization of the side gathering and windrowing devices (8 and 9).

## Patentansprüche

1. Landmaschine zum Zusammenlegen von Schwaden oder zum Schwadlegen von Produkten, wie beispielsweise Gras, Heu oder Stroh, die am Boden liegen, mit einem Hauptrahmen (1), der eine zentrale Vorrichtung zum Aufnehmen und Schwadlegen (7), die mittels einer Hebevorrichtung mit dem Hauptrahmen (1) verbunden ist, und zwei seitliche Vorrichtungen zum Aufnehmen und Schwadlegen (8 und 9) umfasst, die mit Tragarmen (26 und 27) verbunden sind, die sich seitlich zum Rahmen (1) erstrecken, ***dadurch gekennzeichnet,* dass** die seitlichen Vorrichtungen (8 und 9) und die zentrale Vorrichtung (7) im Wesentlichen ausgerichtet sind und sich im Wesentlichen senkrecht auf die Vorschubrichtung (A) der Maschine während der Arbeit erstrecken, *und* dass jeder seitliche Tragarm (26, 27) einer seitlichen Vorrichtung zum Aufnehmen und Schwadlegen (8, 9) in Bezug zum Rahmen (1) auf einer im Wesentlichen vertikalen Achse (28, 29) angelenkt ist, um die er um einen Winkel von ungefähr 90° in Transportposition umgeklappt werden kann, in der die seitlichen Vorrichtungen zum Aufnehmen und Schwadlegen (8, 9) beiderseits der zentralen Vorrichtung zum Aufnehmen und Schwadlegen (7) angeordnet sind, und dass jede seitliche Vorrichtung zum Aufnehmen und Schwadlegen (8, 9) auf ihrem Tragarm (26, 27) mittels einer im Wesentlichen horizontalen Achse (32, 33) angelenkt ist, die im Wesentlichen senkrecht auf die Vorschubrichtung (A) in Arbeitsposition ausgerichtet ist, um welche Gelenkachse (32, 33) er nach oben um einen Winkel von ungefähr 90° für den Transport umklappbar ist.

2. Maschine nach Anspruch 1, ***dadurch gekennzeichnet,* dass** die im Wesentlichen horizontale Gelenkachse (32, 33) jeder seitlichen Vorrichtung zum Aufnehmen und Schwadlegen (8, 9) über dem entsprechenden Tragarm (26, 27) angeordnet ist.

3. Maschine nach Anspruch 2, ***dadurch gekennzeichnet,* dass** jede seitliche Vorrichtung zum Aufnehmen und Schwadlegen (8, 9) um ihre im Wesentlichen horizontale Gelenkachse (32, 33) mittels eines Hydraulikzylinders (36), der zwischen der Vorrichtung (8, 9) und dem entsprechenden Tragarm (26, 27) angeordnet ist, verschiebbar ist.

4. Maschine nach Anspruch 3, ***dadurch gekennzeichnet,* dass** der Hydraulikzylinder (36) unter der entsprechenden seitlichen Vorrichtung zum Aufnehmen und Schwadlegen (8, 9) angeordnet ist.

5. Maschine nach Anspruch 1, ***dadurch gekennzeichnet,* dass** die im Wesentlichen vertikale Gelenkachse (28, 29) jedes seitlichen Tragarms (26, 27) hinter der entsprechenden Vorrichtung zum Aufnehmen und Schwadlegen (8, 9) und in der Nähe seines Endes, das der zentralen Vorrichtung zum Aufnehmen und Schwadlegen (7) am nächsten ist, angeordnet ist.

6. Maschine nach Anspruch 5, ***dadurch gekennzeichnet,* dass** die im Wesentlichen vertikale Gelenkachse (28, 29) jedes seitlichen Tragarms (26, 27) auf einem seitlichen Träger (37, 38) des Rahmens (1) angeordnet ist, wobei dieser seitliche Träger (37, 38) auf einer im Wesentlichen horizontalen Achse (39, 40) angelenkt ist, die in Vorschubrichtung (A) ausgerichtet ist.

7. Maschine nach irgend einem der Ansprüche 5 oder 6, **dadurch *gekennzeichnet,* dass** jeder seitliche Tragarm (26, 27) um seine im Wesentlichen vertikale Gelenkachse (28, 29) mittels eines Hydraulikzylinders (30, 31) verschiebbar ist.

8. Maschine nach irgend einem der vorhergehenden Ansprüche, ***dadurch gekennzeichnet,* dass** der Rahmen (1) Festlegungsmechanismen (46 und 47) für die seitlichen Vorrichtungen zum Aufnehmen und Schwadlegen (8 und 9) in Transportposition umfasst.

9. Maschine nach Anspruch 8, **dadurch *gekennzeichnet,* dass** jeder Festlegungsmechanismus (46 und 47) aus einem Arm (48) besteht, der fest mit dem Rahmen (1) verbunden ist und auf dem ein Haken (49) angelenkt ist, der von einem Hebelsystem (52 und 53) betätigt wird, das mittels eines Hydraulikzylinders (54) gesteuert wird.

10. Maschine nach Anspruch 9, ***dadurch gekennzeichnet,* dass** das Hebelsystem (52 und 53) in Festlegungsposition der seitlichen Vorrichtungen zum Aufnehmen und Schwadlegen (8 und 9) ein Gelenk vom Typ selbst festlegendes Kniegelenk bildet.
